(19) Europäisches Patentamt
European Patent Office
Office européen des brevets

(11) **EP 2 004 460 B1**

(12) **EUROPÄISCHE PATENTSCHRIFT**

(45) Veröffentlichungstag und Bekanntmachung des Hinweises auf die Patenterteilung:
**30.12.2009  Patentblatt 2009/53**

(21) Anmeldenummer: **07727266.4**

(22) Anmeldetag: **23.03.2007**

(51) Int Cl.:
*B60T 7/12* (2006.01)    *B60T 8/32* (2006.01)

(86) Internationale Anmeldenummer:
**PCT/EP2007/052792**

(87) Internationale Veröffentlichungsnummer:
**WO 2007/113134 (11.10.2007 Gazette 2007/41)**

(54) **VERFAHREN UND VORRICHTUNG ZUR STEUERUNG DER BREMSANLAGE EINES FAHRZEUGS**

METHOD AND DEVICE FOR CONTROLLING THE BRAKING SYSTEM OF A VEHICLE

PROCÉDÉ ET DISPOSITIF POUR COMMANDER UN SYSTÈME DE FREINAGE DE VÉHICULE

(84) Benannte Vertragsstaaten:
**DE FR**

(30) Priorität: **03.04.2006   DE 102006015483**

(43) Veröffentlichungstag der Anmeldung:
**24.12.2008   Patentblatt 2008/52**

(73) Patentinhaber: **Robert Bosch GmbH
70442 Stuttgart (DE)**

(72) Erfinder:
• **WAGNER, Jochen
71696 Moeglingen (DE)**
• **EPPLE, Stefan
71696 Moeglingen (DE)**

(56) Entgegenhaltungen:
**DE-A1- 19 524 939     DE-A1- 19 739 152
US-B1- 6 328 389**

## Beschreibung

Stand der Technik

Die Erfindung betrifft ein Verfahren und eine Vorrichtung zur Steuerung der Bremsanlage eines Fahrzeugs, mit einem Unterdruck-Bremskraftverstärker sowie mit einer Unterdruckquelle gemäß den Oberbegriffen der unabhängigen Patentansprüche.

As der DE 195 24 939 A ist es bekannt, die Bremsanlage eines Fahrzeugs derart anzusteuern, dass in bestimmten Betriebssituationen die Bremskraft über die eigentliche Fahrervorgabe hinaus an den Radbremsen aufgebaut wird. Eine derartige Betriebssituation liegt beispielsweise dann vor, wenn der Fahrer das Bremspedal sehr schnell betätigt. Die Betätigung des Bremspedals hat eine Änderung des Vordrucks, das heißt des am Ausgang des Hauptbremszylinders in der Bremsanlage anstehenden Drucks, zur Folge. Von einer Steuereinheit wird daher überprüft, ob die durch die Bremspedalbetätigung hervorgerufene Änderung des Vordrucks eine bestimmte Schwelle überschreitet. Bei Überschreiten der Auslöseschwelle wird ein automatischer Bremsvorgang (Not- oder Panikbremsung) ausgelöst. Zur Verbesserung des Auslösekriteriums ist vorgesehen, den Schwellenwert abhängig von unterschiedlichen Betriebsgrößen, wie beispielsweise dem Vordruckniveau, der Fahrzeuggeschwindigkeit oder der Fahrzeugdrehrate zu wählen.

Aus der DE 197 39 152 A1 ist es zusätzlich bekannt, den Auslöseschwellenwert abhängig von der aktuell vorliegenden Bremsphase zu bestimmen. Dabei wird von einer Steuereinheit entschieden, ob eine Anbremsphase oder ein laufender Bremsvorgang vorliegt. Je nach Bremsphase werden unterschiedliche Kennlinien zur Bestimmung eines Korrekturfaktors herangezogen.

Dokument DE 195 24 939 A1 offenbart ein Verfahren zur Steuerung der Bremsanlage eines Fahrzeugs, mit einem Unterdruck-Bremskraftverstärker und mit einer Unterdruckquelle, wobei wenigstens ein die Betätigung eines Bremsbedienelements durch den Fahrer kennzeichnendes Signal oder eine daraus abgeleitete Größe mit einem veränderlichen Schwellenwert verglichen wird, wenn das Signal oder die daraus abgeleitete Größe den vorgegebenen Schwellenwert überschreitet.

Die bekannten Lösungen geben zwar befriedigende Verfahren und Vorrichtungen zur Bestimmung eines Auslöseschwellenwertes an, welcher zum Auslösen eines automatischen Bremsvorgangs dient. Es hat sich jedoch gezeigt, dass die Bestimmung des Schwellenwertes nicht alle wesentlichen Betriebsgrößen berücksichtigt. Bei hochdynamischen Pedalbetätigungen, also beispielsweise bei einer Stotterbremsung, sinkt der sich nach einer Bremspedalbetätigung einstellende Vordruck, also das Vordruckniveau und der resultierende Vordruckgradient mit zunehmender Zahl der Bremspedalbetätigungen. Wird von der Steuereinheit als das die Betätigung des Bremspedals kennzeichnende Signal der Gradient des Vordrucks und/oder das Vordruckniveau herangezogen, hat dies zur Folge, dass nach einer Vielzahl von Pedalbetätigungen ein vorgegebener Auslöseschwellenwert nicht mehr überschritten werden kann, mit der Folge, dass eine Notbremssituation nicht mehr zuverlässig erkannt wird.

Offenbarung der Erfindung

Technische Aufgabe

Der Erfindung liegt daher die Aufgabe zugrunde, ein Verfahren und eine Vorrichtung anzugeben, mit denen eine Notbremssituation auch nach einer Vielzahl hochdynamischer Pedalbetätigungen zuverlässig erkannt wird.

Technische Lösung

Diese Aufgabe wird verfahrensgemäß mit den Merkmalen des Anspruches 1 und vorrichtungsgemäß mit den Merkmalen des Anspruches 8 gelöst.

Vorteilhafte Weiterbildungen der Erfindungen sind in den Unteransprüchen angegeben.

Der Erfindung liegt der Gedanke zugrunde, den Auslöseschwellenwert, bei dessen Überschreiten ein automatischer Bremsvorgang eingeleitet wird, in Abhängigkeit des Unterdruckniveaus oder des Unterdruckgradienten des Unterdruck-Bremskraftverstärkers zu bestimmen. Nach jedem Bremsvorgang sinkt der am Unterdruck-Bremskraftverstärker anliegende Unterdruck bzw. der Unterdruck im Bremskraftverstärker. Die Absenkung des Vakuums hat erhebliche Funktionseinbußen des Bremskraftverstärkers zur Folge, wodurch sich der bei einer nachfolgenden Bremspedalbetätigung einstellende Vordruck sowie der Vordruckgradient signifikant kleiner ist als bei der vorherigen Bremspedalbetätigung. Dadurch, dass der Auslöseschwellenwert die Unterdruckschwankungen des Unterdruck-Bremskraftverstärkers und/oder in einer Unterdruckversorgungsleitung des Unterdruck-Bremskraftverstärkers berücksichtigt, sinkt der Auslöseschwellenwert bei sinkendem Unterdruck ebenfalls. Hierdurch bleibt die Auslösesensibilität für den Fahrer gleich, unabhängig davon, ob das Bremspedal mehrfach hintereinander, insbesondere hochdynamisch, betätigt wird, oder ob das Bremspedal nur einmal betätigt wird. Aufgrund der Erfindung wird die so genannte Bremsassistentenfunktion auch nach einer Vielzahl von aufeinander folgenden Bremspedalbetätigungen sichergestellt.

Als Unterdruckquelle für den Unterdruck-Bremskraftverstärker kommt beispielsweise die Saugrohranlage eines Verbrennungsmotors oder eine Vakuumpumpe in Betracht, die entweder elektromotorisch oder vom Verbrennungsmotor angetrieben wird.

In Weiterbildung der Erfindung ist vorgesehen, dass in Abhängigkeit des Unterdrucks im Unterdruck-Bremskraftverstärker von einer Steuereinheit ein Korrekturfaktor ermittelt wird, der zur Bestimmung der Auslöseschwelle mit einem vorgegebenen Grundauslöseschwellenwert multipliziert wird. Bevorzugt liegt dieser Korrekturfaktor zwischen 0 und 1.

Gemäß einer vorteilhaften Ausführungsform der Erfindung ist vorgesehen, dass mindestens ein Sensor zur Messung des Unterdruckniveaus im Unterdruck-Bremskraftverstärker und/oder in einer Unterdruckversorgungsleitung des Unterdruck-Bremskraftverstärkers vorgesehen ist. Bevorzugt kommen Unterdruck-Bremskraftverstärker in Zwei-Kammer-Bauart oder in Vier-Kammer-Bauart zur Anwendung.

Gemäß einer alternativen Ausführungsform ist es denkbar, das Unterdruckniveau nicht mittels eines Sensors zu messen, sondern abzuschätzen, d.h. näherungsweise, insbesondere mittels eines Mikrocomputers, anhand von mindestens einer Betriebsgröße mit Einfluss auf den Unterdruck und/oder anhand von mindestens einer Betriebsgröße die von dem Unterdruck beeinflusst wird zu ermitteln.

Als Betriebsgröße zur Ermittlung des Unterdrucks kann der Verlauf der Bremspedalbetätigung über die Zeit, insbesondere die Anzahl von Brembetätigungen innerhalb eines Zeitintervalls, gegebenenfalls unter Berücksichtigung der Intensität der Bremspedalbetätigungen, berücksichtigt werden. Hierzu können beispielsweise die Druckschwankungen des Vordrucks gezählt und ggf. das Vordruckniveau berücksichtigt werden. Umso größer die Anzahl der Bremspedalbetätigungen innerhalb eines Zeitintervalls ist, desto geringer ist der Unterdruck im Bremskraftverstärker. Das Unterdruckniveau sinkt schneller bei kräftigen Bremspedalbetätigungen, also bei hohen Vordrücken.

Weiterhin können eine ABS-Zustandsgröße (ABS) und/oder die Drehzahl des Fahrzeugmotors (nMot) und/oder die Fahrpedalstellung (PW) und/oder ein die Funktion der Unterdruckquelle sicherstellendes Signal (VacValid), berücksichtigt werden.

Der Einfluss der Betriebsgrößen auf das Unterdruckniveau bzw. des Unterdruckniveaus auf die Betriebsgrößen kann beispielsweise anhand eines Kennlinienmodells bestimmt werden.

Die Bestimmung des Unterdrucks am Unterdruck-Bremskraftverstärker, durch Messen oder Ermitteln anhand von Betriebsgrößen, kann zusätzlich dazu genutzt werden, die Versorgung des Unterdruck-Bremskraftverstärkers mit Unterdruck zu steuern. Beispielsweise kann bei Unterschreiten eines Mindest-Unterdrucks ein Unterdruckspeicher zugeschaltet werden, mithilfe dessen das ursprüngliche Unterdruckniveau im Unterdruck-Bremskraftverstärker in kürzester Zeit wieder herstellbar ist.

Die erfindungsgemäße Vorrichtung umfasst einen Mikrocomputer, mit dessen Hilfe das Unterdruckniveau oder der Unterdruckgradient des Unterdruck-Bremskraftverstärkers bei der Bestimmung des Auslöseschwellenwertes berücksichtigt werden kann. Entweder es wird dem Mikrocomputer das tatsächliche Ist-Unterdruckniveau zugeführt oder der Mikrocomputer ermittelt das Unterdruckniveau anhand von Betriebgrößen. Zur Bestimmung eines Korrekturfaktors in Abhängigkeit des Unterdrucks ist eine Kennlinie oder ein entsprechendes Polynom definiert. Die Kennlinie bzw. das Polynom können anhand von Fahrzeugversuchen, Prüfstandsversuchen sowie Simulationen ermittelt werden.

Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1　ein Blockschaltbild einer Steuervorrichtung für eine Bremsanlage eines Fahrzeugs, bei der der Anhand von Betriebsgrößen ermittelte Unterdruck $P_{Vakuum}$ bei der Ermittlung eines Korrekturfaktors für den Auslöseschwellenwert berücksichtigt wird,

Fig. 2　ein Blockschaltbild einer alternativen Steuervorrichtung für eine Bremsanlage eines Fahrzeugs bei der der tatsächlich gemessene Unterdruck $P_{Vakuum}$ bei der Ermittlung eines Korrekturfaktors für den Auslöseschwellenwert berücksichtigt wird, und

Fig. 3　ein vereinfachtes Flussdiagramm, welches ein Programm eines Mikrocomputers darstellt, mit dessen Hilfe der Auslöseschwellenwert am Beispiel eines Schwellenwertes für die Vordruckänderung bestimmt wird.

Ausführungsformen der Erfindung

In den Figuren sind gleiche Bauteile und Bauteile mit gleicher Funktion mit den gleichen Bezugszeichen gekennzeichnet.

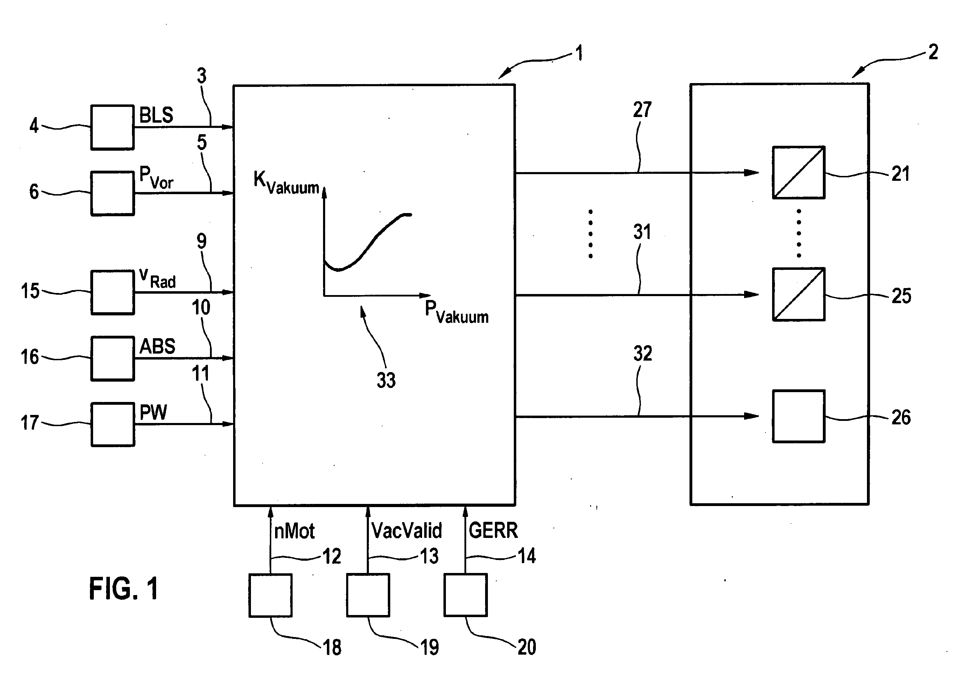

In Fig. 1 ist eine elektronische Steuereinheit 1 mit mindestens einem Mikrocomputer dargestellt. Die Steuereinheit 1 steuert eine an sich aus dem Stand der Technik, beispielsweise aus der DE 195 01 760 A1, bekannte Bremsanlage 2. Der Steuereinheit 1 werden über verschiedene Eingangsleitungen Betriebsgrößen des Fahrzeugs zugeführt. Eine erste Eingangsleitung 3 verbindet die Steuereinheit 1 mit einem Bremspedalschalter 4, welcher ein eine Bremspedalbetätigung kennzeichnendes Signal BLS erzeugt. Eine zweite Eingangsleitung 5 verbindet mindestens einen Sensor 6 zur Erfassung des Vordrucks $P_{vor}$ in der Bremsanlage 2, also des am Ausgang des Hauptbremszylinders in der Bremsanlage 2 anstehenden Drucks. Alternativ hierzu oder ergänzend erfasst der Sensor 6 oder weitere Sensoren weitere Betätigungssignale, wie die Betätigungskraft des Bremspedals, das auf das Bremspedal ausgeübte Moment oder der vom Bremspedal zurückgelegte Weg. Mittels der Steuereinheit 1 wird die Anzahl der Bremspedalbetätigungen in einem vorgegebenen Zeitintervall gezählt. Unter Berücksichtigung der Intensität der Bremspedalbetätigungen, also der Größe des Vordrucks $P_{vor}$, wird von der Steuereinheit 1 anhand von Kennlinienmodellen auf den Unterdruck $P_{Vakuum}$ im Bremskraftverstärker oder in einer Unterdruckversorgungsleitung geschlossen.

Über die Eingangsleitungen 9 bis 14 werden der Steuereinheit je nach Bedarf weitere Betriebsgrößen des Fahrzeugs von Messeinrichtungen 15 bis 20 zugeführt. Beispielsweise erhält die Steuereinheit 1 über die Eingangsleitung 10 Signale von der Messeinrichtung 15, aus der die Radgeschwindigkeiten $V_{Rad}$ der Räder des Fahrzeugs abgeleitet werden können. Weitere Eingangsgrößen bilden eine ABS-Zustandsgröße (ABS), die Motordrehzahl vom Antriebsmotor des Fahrzeugs (nMot), die Fahrpedalstellung (PW) und ein Signal, das die Funktion der Vakuumquelle sicherstellt (VacValid). Diese Betriebsgrößen können alternativ oder kumulativ in die Bestimmung des Unterdrucks $P_{Vakuum}$ einfließen.

Die an sich bekannte hydraulische Bremsanlage 2 verfügt über elektrisch steuerbare Ventile 21 bis 25 und Pumpen 26, die von der Steuereinheit 1 über deren Ausgangsleitungen 27 bis 31 sowie 32 ansteuerbar sind. Durch Betätigen von Pumpen und Ventilen wird an den einzelnen Radbremsen des Fahrzeugs, unabhängig vom Fahrer, gezielt Druck auf- und abgebaut, insbesondere bei der Durchführung eines automatischen Bremsvorgangs.

Die Steuereinheit 1 verfügt neben einer Antiblockierfunktion und gegebenenfalls einer Antischlupf- und/oder Fahrdynamikregelungsfunktion über einen so genannten Bremsassistenten, welcher auf der Basis der Betätigungssignale für das Bremspedal eine Betriebssituation erkennt, in welcher der Fahrer, eine sehr hohe Bremskraft an den Radbremsen wünscht und bei Vorliegen dieser Situation einen automatischen Bremsvorgang ausführt. Die Erkennung der Betriebssituation erfolgt durch einen Vergleich des wenigstens einen Betätigungssignals des Bremspedals mit einem vorgegebenen Auslöseschwellenwert. Im bevorzugten Ausführungsbeispiel wird als Kriterium für die Auslösung des automatischen Bremsvorgangs, bei welchem an den Radbremsen über die vom Fahrer auf die Bremsanlage 2 ausgeübte Vorgabe Bremskraft aufgebaut wird, die Änderung $DP_{Vor}$ des Vordrucks der Bremsanlage 2 gewählt. Alternativ oder zusätzlich können die bereits erwähnten Betätigungssignale herangezogen werden.

Gemäß der Erfindung verändert die Steuereinheit 1 den Auslöseschwellenwert in Abhängigkeit des näherungsweise anhand von Betriebsgrößen ermittelten Unterdrucks $P_{Vakuum}$ des Unterdruck-Bremskraftverstärkers, vorzugsweise in der Art, dass der Auslöseschwellenwert absinkt, wenn das Unterdruckniveau $P_{Vakuum}$ absinkt. Das Auslösen des automatischen Bremsvorgangs wird also bei sinkendem Unterdruck $P_{Vakuum}$ empfindlicher. Der Auslöseschwellenwert wird am Beispiel eines Schwellenwertes für die Vordruckänderung $DP_{Vor}$ im Mikrocomputer der Steuereinheit 1 wie folgt berechnet:

$$A = K_{Vakuum} * A_{Grund}$$

mit

A: Auslöseschwellenwert
$A_{Grund}$: Grundauslöseschwellenwert
$K_{Vakuum}$: Korrekturfaktor, abhängig vom Unterdruckniveau

Für den Einfluss des Unterdrucks $P_{Vakuum}$ wird eine Kennlinie 33 oder ein entsprechendes Polynom definiert, welches den vordruckabhängigen Korrekturfaktor $K_{Vakuum}$ bildet.

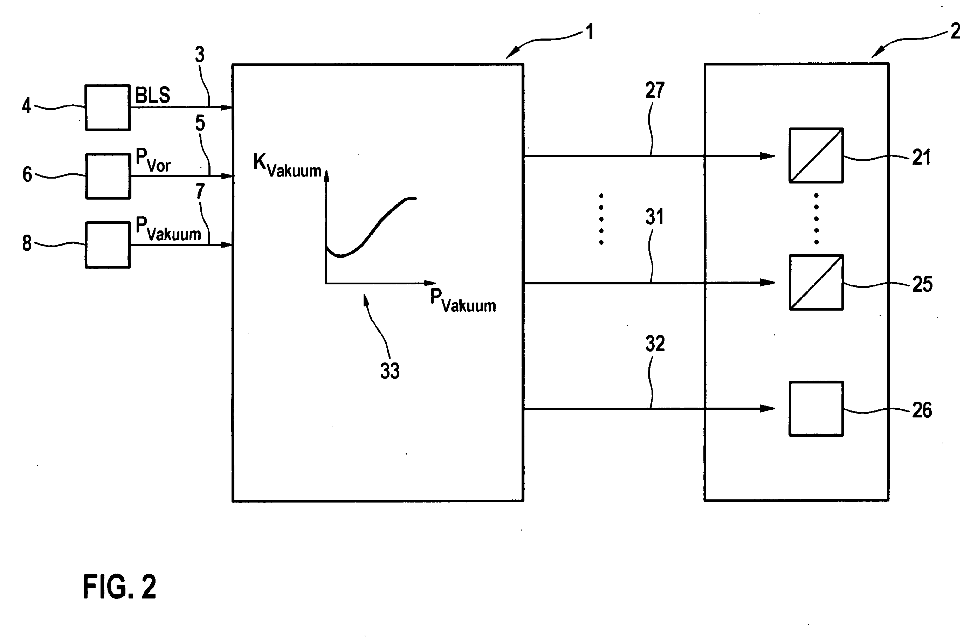

In Fig. 2 ist eine alternative elektronische Steuereinheit 1 dargestellt. Die gezeigte Bremsanlage 2 entspricht der in Fig. 1 dargestellten Bremsanlage 2. Im Gegensatz zu der in Fig. 1 dargestellten Steuereinheit ist die in Fig. 2 gezeigte Steuereinheit 1 über die Eingangsleitung 7 mit einem Messfühler 8 verbunden, der den Unterdruck $P_{Vakuum}$ im Unterdruck-Bremskraftverstärker und/oder einer Unterdruckversorgungsleitung misst. Anhand dieses tatsächlichen Ist-Wertes wird der Korrekturfaktor $K_{Vakuum}$ sowie der Auslöseschwellenwert A wie zuvor erläutert ermittelt. Es fällt lediglich der Schritt der Bestimmung des Unterdrucks $P_{Vakuum}$ anhand von Betriebsgrößen weg. Ansonsten ist die Funktion mit der in Fig.1 dargestellten Steuereinheit identisch. Es können zusätzlich auch weitere Betriebsgrößen bei der Ermittlung des Korrekturfaktors $K_{Vakuum}$ bzw. des Auslöseschwellenwertes A berücksichtigt werden.

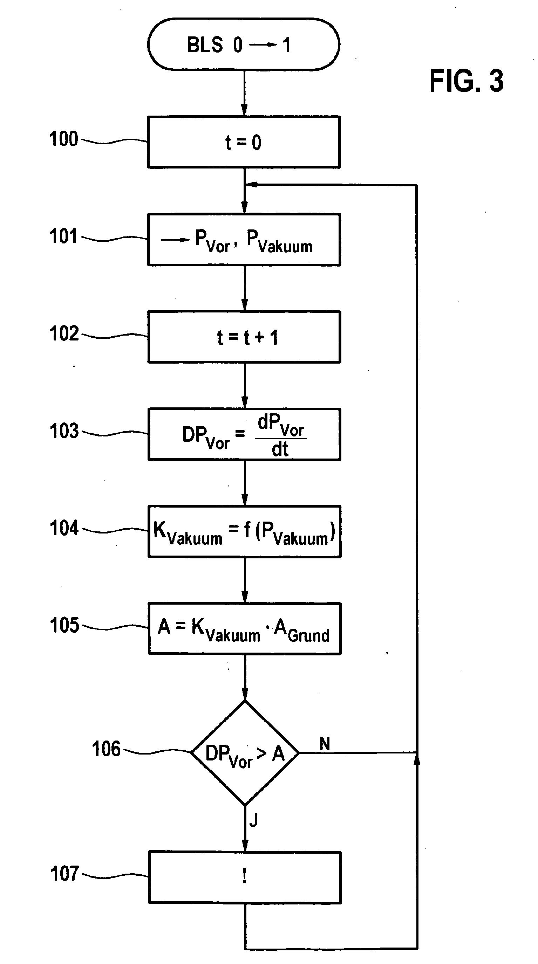

Ein bevorzugtes Ausführungsbeispiel am Beispiel einer unterdruckabhängigen Auslöseschwelle für den Vordruckgradienten ist anhand des Flussdiagramms in Fig. 3 dargestellt. Dieses zeigt ein Programm des wenigstens einen Mikrocomputers der Steuereinheit 1, welches mit einem Wechsel des Signals BNS von 0 auf den Wert 1 gestartet wird, das heißt wenn der Fahrer das Bremspedal betätigt. Daraufhin wird in einem Vorschritt 100 der Betätigungszeitzähler inkrementiert.

In einem ersten Schritt 101 wird der Vordruck $P_{Vor}$ sowie der Unterdruck $P_{Vakuum}$ am bzw. im Unterdruck-Bremskraftverstärker sowie gegebenenfalls weitere Betriebsgrößen eingelesen. Der Unterdruck $P_{vakuum}$ kann in einem nicht dargestellten Programmschritt anhand von Betriebgrößen näherungsweise ermittelt werden oder es wird ein Messwert des Ist-Unterdrucks für die weitere Berechnung herangezogen. Daraufhin wird im zweiten Schritt 102 der Betätigungszeitzähler t um einen Zeit- bzw. Zählschritt erhöht. Im dritten Schritt 103 wird auf Basis des erfassten Vordrucks $P_{Vor}$ und eines Vordruckswertes aus einem vorhergehenden Programmdurchlauf der Vordruckgradient $DP_{Vor}$ unter Berücksichtigung des Betätigungszählerstandes bestimmt. Dies erfolgt beispielsweise als zeitliche Ableitung des Vordrucks $P_{Vor}$ oder auf Basis einer Differenzbildung. Im Schritt 104 wird der unterdruckabhängige Korrekturfaktor $K_{Vakuum}$, beispielsweise anhand einer Kennlinie 33 bestimmt. Gegebenenfalls finden weitere Betriebsgrößen Berücksichtigung.

Im fünften Schritt 105 wird der Auslöseschwellenwert A unter Zuhilfenahme des Korrekturfaktors $K_{Vakuum}$ sowie einem Grundauslöseschwellenwert $A_{Grund}$ bestimmt.

Im darauf folgenden Abfrageschritt 106 wird der Vordruckgradient $DP_{Vor}$ mit dem Auslöseschwellenwert A verglichen. Überschreitet der Vordruckgradient $DP_{Vor}$ den Auslöseschwellenwert A, wird gemäß Schritt 107 unter Ansteuerung von Pumpen 26 und Ventilen 21 bis 25 ein automatischer Bremsvorgang durchgeführt. Überschreitet der Vordruckgradient $DP_{Vor}$ den Auslöseschwellenwert A nicht, so wird das Programm mit Schritt 101 wiederholt. Wird im Schritt 107 ein Beendigungskriterium für den automatischen Bremsvorgang erfüllt, beispielsweise wenn der Vordruck einen vorgegebenen Schwellenwert unterschreitet, wird das Programm ebenfalls mit Schritt 101 wiederholt. Löst der Fahrer das Bremspedal, wird das Programm beendet.

**Patentansprüche**

1. Verfahren zur Steuerung der Bremsanlage (2) eines Fahrzeugs, mit einem Unterdruck-Bremskraftverstärker und mit einer Unterdruckquelle, wobei wenigstens ein die Betätigung eines Bremsbedienelements durch den Fahrer kennzeichnendes Signal oder eine daraus abgeleitete Größe mit einem veränderlichen Schwellenwert verglichen wird und ein automatischer Bremsvorgang ausgelöst wird, wenn das Signal oder die daraus abgeleitete Größe den vorgegebenen Schwellenwert überschreitet,
**dadurch gekennzeichnet,**
**dass** der Auslöseschwellenwert abhängig von dem Unterdruckniveau ($P_{Vakuum}$) oder von dem Unterdruckgradienten des Unterdruck-Bremskraftverstärker ist.

2. Verfahren nach Anspruch 1,
**dadurch gekennzeichnet,**
**dass** das die Betätigung kennzeichnende Signal oder die daraus abgeleitete Größe der Gradient des Vordrucks ($DP_{Vor}$) und/oder das Vordruckniveau ($P_{Vor}$) ist.

3. Verfahren nach Anspruch 1 oder 2,
**dadurch gekennzeichnet,**
**dass** in Abhängigkeit der Höhe des Unterdruckniveaus oder des Gradienten Unterdrucks ein Korrekturfaktor ($K_{Vakuum}$) für den Auslöseschwellenwert bestimmt wird, der vorzugsweise zwischen 0 und 1 liegt.

4. Verfahren nach Anspruch 3,
**dadurch gekennzeichnet,**
**dass** der Korrekturfaktor ($K_{Vakuum}$) mit kleiner werdendem Unterdruck ($P_{Vakuum}$) (mit größer werdendem Absolutdruck) ebenfalls kleiner wird.

5. Verfahren nach einem der vorhergehenden Ansprüche,
**dadurch gekennzeichnet,**
**dass** der Unterdruck ($P_{Vakuum}$) im Unterdruck-Bremskraftverstärker und/oder in einer Unterdruckversorgungsleitung des Unterdruck-Bremskraftverstärkers gemessen wird.

6. Verfahren nach einem der vorhergehenden Ansprüche 1 bis 5,
**dadurch gekennzeichnet,**
**dass** der Unterdruck ($P_{Vakuum}$) anhand von mindestens einer Betriebsgröße mit Einfluss auf den Unterdruck und/oder anhand von mindestens einer Betriebsgröße die von dem Unterdruck beeinflusst wird zumindest näherungsweise ermittelt wird.

7. Verfahren nach Anspruch 6,
**dadurch gekennzeichnet,**
**dass** als Betriebsgrößen zur Ermittlung des Unterdrucks ($P_{Vakuum}$) der Verlauf der Bremspedalbetätigung über die Zeit, insbesondere die Anzahl von Brembetätigungen innerhalb eines Zeitintervalls, gegebenenfalls unter Berücksichtigung der Intensität der Bremspedalbetätigungen und/oder eine ABS-Zustandsgröße (ABS) und/oder die Drehzahl des Fahrzeugmotors (nMot) und/oder die Fahrpedalstellung (PW) und/oder ein die Funktion der Unterdruckquelle sicherstellendes Signal (VacValid), insbesondere anhand mindestens eines Kennlinienmodells, berücksichtigt werden.

8. Verfahren nach einem der vorhergehenden Ansprüche,
**dadurch gekennzeichnet,**
**dass** der Unterdruck-Bremskraftverstärker in Abhängigkeit des Unterdrucks ($P_{Vakuum}$) mit Unterdruck versorgt wird, vorzugsweise aus einer zusätzlichen Unterdruckquelle, insbesondere einem Unterdruckspeicher.

9. Vorrichtung zur Steuerung der Bremskraftanlage (2) eines Fahrzeugs, mit einem Unterdruck-Bremskraftverstärker und mit einer Unterdruckquelle sowie mit einer Steuereinheit (1), welche wenigstens ein die Betätigung eines vom Fahrer betätigbaren Bedienelements charakterisierendes Signal erfasst, wobei die Steuereinheit (1) einen automatischen Bremsvorgang auslöst, wenn das die Betätigung charakterisierende Signal oder eine daraus abgeleitete Größe einen veränderlichen Schwellenwert überschreitet,

**dadurch gekennzeichnet,**
**dass** die Steuereinheit (1) Mittel zur Bestimmung des Auslöseschwellenwertes in Abhängigkeit von dem Unterdruckniveau ($P_{Vakuum}$) und/oder dem Unterdruckgradienten des Unterdruck-Bremskraftverstärkers umfasst.

10. Vorrichtung nach Anspruch 9,
**dadurch gekennzeichnet,**
**dass** mindestens ein Sensor (8) zur Bestimmung des Unterdruckniveaus im Unterdruck-Bremskraftverstärker und/oder in einer Unterdruckversorgungsleitung vorgesehen ist und dass der Sensor (8) mit der Steuereinheit (1) signalleitend verbunden ist.

11. Vorrichtung nach Anspruch 9,
**dadurch gekennzeichnet,**
**dass** die Mittel das Unterdruckniveau anhand von mit dem Unterdruckniveau ($P_{Vakuum}$) und/oder dem Unterdruckgradienten korrelierenden Betriebsgrößen näherungsweise ermittelnd ausgebildet sind.

12. Vorrichtung nach einem der Ansprüche 9 bis 11,
**dadurch gekennzeichnet,**
**dass** ein Sensor zur Erfassung der Anzahl der Bremspedalbetätigungen in einem Zeitintervall und/oder der Intensität der Bremspedalbetätigungen in einem Zeitintervall, insbesondere durch Messen des Vordrucks $p_{vor}$, vorgesehen ist.

13. Vorrichtung nach einem der Anspruch 9 bis 12,
**dadurch gekennzeichnet,**
**dass** ein Unterdruckreservoir zum schnellen Wiederherstellen des maximalen Unterdruckniveaus im Unterdruck-Bremskraftverstärker in Abhängigkeit des gemessenen oder ermittelten Unterdruckniveaus vorgesehen ist.

**Claims**

1. Method for controlling the braking system (2) of a vehicle, having a partial vacuum brake booster and having a partial vacuum source, wherein at least one signal which characterizes the activation of a brake operator control element by the driver or a variable derived therefrom is compared with a variable threshold value, and an automatic braking process is triggered if the signal or the variable derived therefrom exceeds the predefined threshold value,
**characterized**
**in that** the triggering threshold value is dependent on the partial vacuum level ($P_{vacuum}$) or on the partial vacuum gradient of the partial vacuum brake booster.

2. Method according to Claim 1,

**characterized**
**in that** the signal which characterizes the activation or the variable derived therefrom is the gradient of the admission pressure ($DP_{adm}$) and/or the admission pressure level ($P_{adm}$).

3. Method according to Claim 1 or 2,
**characterized**
**in that** a correction factor ($C_{vacuum}$) for the triggering threshold value is determined as a function of the magnitude of the partial vacuum level or of the gradient of the partial vacuum, said correction factor being preferably between 0 and 1.

4. Method according to Claim 3,
**characterized**
**in that** as the partial vacuum ($P_{vacuum}$) becomes smaller (as the absolute pressure becomes larger), the correction factor ($C_{vacuum}$) also becomes smaller.

5. Method according to one of the preceding claims,
**characterized**
**in that** the partial vacuum ($P_{vacuum}$) is measured in the partial vacuum brake booster and/or in a partial vacuum supply line of the partial vacuum brake booster.

6. Method according to one of the preceding Claims 1 to 5,
**characterized**
**in that** the partial vacuum ($P_{vacuum}$) is determined at least approximately on the basis of at least one operational variable which influences the partial vacuum and/or on the basis of at least one operational variable which is influenced by the partial vacuum.

7. Method according to Claim 6,
**characterized**
**in that** the profile of the activation of the brake pedal over time, in particular the number of braking activations within a time interval, are taken into account as operational variables for determining the partial vacuum ($P_{vacuum}$), if appropriate taking into account the intensity of the brake pedal activations and/or an ABS status variable (ABS) and/or the rotational speed of the vehicle engine (nMot) and/or the position (PW) of the accelerator pedal and/or a signal (VacValid) which ensures the function of the partial vacuum source, in particular on the basis of at least one characteristic curve model.

8. Method according to one of the preceding claims,
**characterized**
**in that** the partial vacuum brake booster is supplied with partial vacuum as a function of the partial vacuum ($P_{vacuum}$), preferably from an additional partial vacuum source, in particular a partial vacuum accumulator.

9. Device for controlling the braking system (2) of a vehicle, having a partial vacuum brake booster, a partial vacuum source and a control unit (1) which senses at least one signal which characterizes the activation of an operator control element which can be activated by the driver, wherein the control unit (1) triggers an automatic braking process if the signal which characterizes the activation or a variable derived therefrom exceeds a variable threshold value, **characterized in that** the control unit (1) comprises means for determining the triggering threshold value as a function of the partial vacuum level ($P_{vacuum}$) and/or the partial vacuum gradient of the partial vacuum brake booster.

10. Device according to Claim 9, **characterized in that** at least one sensor (8) for determining the partial vacuum level is provided in the partial vacuum brake booster and/or in a partial vacuum supply line, and in that the sensor (8) is connected in a signal-conducting fashion to the control unit (1).

11. Device according to Claim 9, **characterized in that** the means are designed to approximately determine the partial vacuum level on the basis of operational variables which correlate with the partial vacuum level ($P_{vacuum}$) and/or the partial vacuum gradient.

12. Device according to one of Claims 9 to 11, **characterized in that** a sensor for sensing the number of brake pedal activations in a time interval and/or the intensity of the brake pedal activations in a time interval, in particular by measuring the admission pressure ($p_{adm}$), is provided.

13. Device according to one of Claims 9 to 12, **characterized in that** a partial vacuum reservoir for quickly restoring the maximum partial vacuum level in the partial vacuum brake booster as a function of the measured or determined partial vacuum level is provided.

## Revendications

1. Procédé pour commander l'équipement de freinage (2) d'un véhicule, comprenant un servofrein à dépression et une source de dépression, au moins un signal qui identifie l'actionnement d'un élément de commande de freinage par le conducteur ou une grandeur qui en est dérivée étant comparé avec une valeur de seuil variable et une opération de freinage automatique étant déclenchée lorsque le signal ou la grandeur qui en est dérivée dépasse la valeur de seuil prédéfinie, **caractérisé en ce que** la valeur de seuil de déclenchement est dépendante du niveau de dépression ($P_{Vakuum}$) ou du gradient de dépression du servofrein à dépression.

2. Procédé selon la revendication 1, **caractérisé en ce que** le signal qui identifie l'actionnement ou la grandeur qui en est dérivée est le gradient de la pression d'alimentation ($DP_{Vor}$) et/ou le niveau de pression d'alimentation ($P_{Vor}$).

3. Procédé selon la revendication 1 ou 2, **caractérisé en ce qu'**un facteur de correction ($K_{Vakuum}$) de la valeur de seuil de déclenchement, lequel est de préférence compris entre 0 et 1, est déterminé en fonction du niveau de dépression ou du gradient de dépression.

4. Procédé selon la revendication 3, **caractérisé en ce que** le facteur de correction ($K_{Vakuum}$) diminue également à mesure que la dépression ($P_{Vakuum}$) diminue (et que la pression absolue augmente).

5. Procédé selon l'une des revendications précédentes, **caractérisé en ce que** la dépression ($P_{Vakuum}$) est mesurée dans le servofrein à dépression et/ou dans une conduite d'alimentation en dépression du servofrein à dépression.

6. Procédé selon l'une des revendications précédentes 1 à 5, **caractérisé en ce que** la dépression ($P_{Vakuum}$) est déterminée au moins approximativement à l'aide d'au moins une grandeur opérationnelle ayant une influence sur la dépression et/ou à l'aide d'au moins une grandeur opérationnelle qui est influencée par la dépression.

7. Procédé selon la revendication 6, **caractérisé en ce que** les grandeurs opérationnelles qui sont prises en considération pour déterminer la dépression ($P_{Vakuum}$) sont la courbe d'actionnement de la pédale de frein dans le temps, notamment le nombre d'actionnements des freins pendant un intervalle de temps, le cas échéant en tenant compte de l'intensité des actionnements de la pédale de frein, et/ou une grandeur d'état de l'ABS (ABS) et/ou la vitesse de rotation du moteur du véhicule (nMot) et/ou la position de la pédale d'accélérateur (PW) et/ou un signal qui garantit le fonctionnement de la source de dépression (VacValid), notamment au moyen d'au moins un modèle de courbe caractéristique.

8. Procédé selon l'une des revendications précédentes, **caractérisé en ce que** le servofrein à dépression est alimenté en dépression en fonction de la dépression ($P_{Vakuum}$), de préférence depuis une source de dépression supplémentaire, notamment un accumulateur à dépression.

9. Dispositif pour commander l'équipement de freinage (2) d'un véhicule, comprenant un servofrein à dépression et une source de dépression ainsi qu'une unité de commande (1) qui détecte au moins un signal qui caractérise l'actionnement d'un élément de commande par le conducteur, l'unité de commande (1) déclenchant une opération de freinage automatique lorsque le signal qui caractérise l'actionnement ou une grandeur qui en est dérivée dépasse une valeur de seuil variable, **caractérisé en ce que** l'unité de commande (1) comprend des moyens pour déterminer la valeur de seuil de déclenchement en fonction du niveau de dépression ($P_{Vakuum}$) et/ou du gradient de dépression du servofrein à dépression.

10. Dispositif selon la revendication 9, **caractérisé en ce qu'**il existe au moins un détecteur (8) destiné à déterminer le niveau de dépression dans le servofrein à dépression et/ou dans une conduite d'alimentation en dépression et que le détecteur (8) est relié à l'unité de commande (1) avec conduction du signal.

11. Dispositif selon la revendication 9, **caractérisé en ce que** les moyens sont configurés pour déterminer approximativement le niveau de dépression au moyen de grandeurs opérationnelles en corrélation avec le niveau de dépression ($P_{Vakuum}$) et/ou le gradient de dépression.

12. Dispositif selon l'une des revendications 9 à 11, **caractérisé en ce qu'**il existe un détecteur pour détecter le nombre d'actionnements de la pédale de frein pendant un intervalle de temps et/ou l'intensité des actionnements de la pédale de frein pendant un intervalle de temps, notamment en mesurant la pression d'alimentation $p_{Vor}$.

13. Dispositif selon l'une des revendications 9 à 12, **caractérisé en ce qu'**il existe un réservoir à dépression destiné au rétablissement rapide du niveau de dépression maximum dans le servofrein à dépression en fonction du niveau de dépression mesuré ou déterminé.

FIG. 1

**FIG. 2**

**FIG. 3**

100 — $t = 0$

101 — $\longrightarrow P_{Vor}, \ P_{Vakuum}$

102 — $t = t + 1$

103 — $DP_{Vor} = \dfrac{dP_{Vor}}{dt}$

104 — $K_{Vakuum} = f\,(P_{Vakuum})$

105 — $A = K_{Vakuum} \cdot A_{Grund}$

106 — $DP_{Vor} > A$  N

J

107 — !

BLS 0 ⟶ 1

**IN DER BESCHREIBUNG AUFGEFÜHRTE DOKUMENTE**

**In der Beschreibung aufgeführte Patentdokumente**

- DE 19524939 A
- DE 19739152 A1
- DE 19524939 A1
- DE 19501760 A1